# EUROPÄISCHE PATENTSCHRIFT

(11) **EP 2 278 240 B1**
(45) Veröffentlichungstag und Bekanntmachung des Hinweises auf die Patenterteilung: **15.08.2018**
(21) Anmeldenummer: 10006508.5
(22) Anmeldetag: 23.06.2010
(51) Int. Cl.: F25D 31/00, A47J 31/44

(54) **Vorrichtung und Verfahren zum Erzeugen von gekühltem Kaffee**
Device and method for producing cooled coffee
Dispositif et procédé destinés à la production de café refroidi

(30) Priorität: 15.07.2009 DE 102009033507
(43) Veröffentlichungstag der Anmeldung: 26.01.2011
(73) Patentinhaber: FRANKE Kaffeemaschinen AG, 4663 Aarburg (CH)
(72) Erfinder:
(74) Vertreter: Lemcke, Brommer & Partner Patentanwälte Partnerschaft mbB

(56) Entgegenhaltungen:
- WO-A2-2008/061726
- DE-B- 1 233 993
- JP-A- 2007 202 943

## Beschreibung

Die Erfindung betrifft eine Vorrichtung zum Erzeugen von gekühltem Kaffee gemäß der Ansprüche 1 und 10.

Der Konsum von mittels Brüheinheiten erzeugtem Kaffee erfreut sich großer Beliebtheit im gastronomischen und privaten Bereich. Immer häufiger werden hierbei Kaffee-Mixgetränke hergestellt, beispielsweise unter Zugabe von Milchschaum und/oder weiteren Geschmacksstoffen wie Sirup. Insbesondere an heißen Tagen oder zur Herstellung spezieller Mischgetränke ist häufig die Verwendung von gekühltem Kaffee wünschenswert. Hierbei ist es üblich, Kaffee in großer Menge aufzubrühen und anschließend über einen längeren Zeitraum zu kühlen oder an der Atmosphäre abkühlen zu lassen.

Weiterhin ist die Verwendung von Wärmetauschern zur Kaffeekühlung bekannt, so beschreibt die WO 2008/061726 eine Vorrichtung, bei der eine Portion Kaffee, nach seiner Zubereitung in einem Sammelbehälter gesammelt wird und anschließend mittels einer Pumpe mehrfach durch einen Wärmetauscher geleitet wird. Der Wärmetauscher weist hierbei zwei Strömungspfade auf, die druck- und flüssigkeitsdicht in geometrisch und thermisch engem Kontakt angeordnet sind. Der Kaffee durchläuft hierbei den einen Strömungspfad und ein Kühlkreislauf eines Kompressorkühlaggregates durchläuft den anderen Strömungspfad des Wärmetauschers.

Aus der japanischen Patentanmeldung JP 2007 202943 A ist eine Vorrichtung zum Erzeugen von gekühltem Tee bekannt. Hierbei wird frisch gebrühter, heißer Tee in einem Wärmetauscher mit Frischwasser heruntergekühlt. Dabei wird die Abwärme des Tees zur Erwärmung des Frischwassers zurückgewonnen, welches dem Heißwasserbereiter für die weitere Teebereitung zugeführt wird. Der vorgekühlte Tee wird dann in einer zweiten Kühlstufe mit einem Kühlaggregat weiter herabgekühlt. Nachteilig ist hierbei einerseits die lange Vorlaufzeit, bis der gekühlte Tee aus der Kühlleitung austritt, anderseits die große Restmenge an Tee, die in der langen Kühlleitung verbleibt und eine Entleerung und Reinigung erschwert.

Häufig besteht jedoch der Wunsch, frisch gebrühten kalten Kaffee in kurzer Zeit zu erzeugen. Darüber hinaus ist zum Aufbrühen des Kaffees einerseits
eine hohe Energiemenge zum Erhitzen des Wassers und andererseits eine hohe Energiemenge für den Kühlprozess, insbesondere mittels eines Kompressors, notwendig.

Der vorliegenden Erfindung liegt daher die Aufgabe zugrunde, eine Vorrichtung und ein Verfahren zu schaffen, mittels derer in schneller Weise auf Wunsch frisch gebrühter kalter Kaffee erzeugbar ist. Darüber hinaus soll eine Energieeinsparung bei der Erzeugung frisch gebrühten, gekühlten Kaffees erzielt werden. Weiterhin soll die Vorgabe einer Ausgabetemperatur des gekühlten Kaffees unabhängig von beispielsweise der Temperatur des in die Brüheinheit zugeführten Wassers möglich sein.

Gelöst ist diese Aufgabe durch eine Vorrichtung gemäß Anspruch 1 und ein Verfahren gemäß Anspruch 10. Vorteilhafte Ausgestaltungen der erfindungsgemäßen Vorrichtung finden sich in den Ansprüchen 2 bis 9 und des erfindungsgemäßen Verfahrens in den Ansprüchen 11 bis 15.

Die erfindungsgemäße Vorrichtung zum Erzeugen von gekühltem Kaffee umfasst eine Brüheinheit zum Erzeugen von Kaffee, ein Kühlaggregat und einen als Wärmetauscher ausgebildeten Kaffeekühler. Der Kaffeekühler weist mindestens einen ersten und einen zweiten Strömungspfad auf. Die beiden Strömungspfade sind thermisch, jedoch nicht fluidleitend verbunden.

Der erste Strömungspfad ist mit einem Kühlmittel durchströmbar und der zweite Strömungspfad ist fluidleitend mit einem Kaffeeauslass der Brüheinheit verbunden. Frisch gebrühter Kaffee aus der Brüheinheit kann somit über den Kaffeeauslass durch den zweiten Strömungspfad geleitet werden und durch Wärmeaustausch mit einem durch den ersten Strömungspfad durchgeleiteten Kühlmittel gekühlt werden.

Wesentlich ist, dass die Vorrichtung weiterhin einen Frischwasserzulauf und einen als weiteren Wärmetauscher ausgebildeten Frischwasserkühler umfasst. Wie der Kaffeekühler weist auch der Frischwasserkühler mindestens einen ersten und einen zweiten Strömungspfad auf, wobei die beiden Strömungspfade thermisch, jedoch nicht fluidleitend verbunden sind.

Der Frischwasserzulauf ist stromabwärts mit dem zweiten Strömungspfad des Frischwasserkühlers, weiter stromabwärts mit dem ersten Strömungspfad des Kaffeekühlers und weiter stromabwärts mit der Brüheinheit fluidleitend verbunden. Der erste Strömungspfad des Frischwasserkühlers ist mit einem Kühlmittelkreislauf des Kühlaggregates fluidleitend verbunden.

Die Bezeichnungen "stromabwärts" und "fluidleitend verbunden" schließen hierbei jeweils ein, dass gegebenenfalls weitere Zwischenelemente im Strömungspfad angeordnet sind.

Im Gegensatz zum Stand der Technik weist die erfindungsgemäße Vorrichtung somit zusätzlich zu dem Kaffeekühler einen Frischwasserkühler auf. Mittels des Frischwasserkühlers und des Kühlaggregates wird das Frischwasser gekühlt. Das gekühlte Frischwasser durchströmt den ersten Strömungspfad des Kaffeekühlers, so dass bezüglich des Kaffeekühlers das gekühlte Frischwasser als Kühlmittel fungiert. Aufgrund des Wärmeaustausches wird somit der Kaffee in dem Kaffeekühler gekühlt und das Frischwasser wiederum erwärmt. Das auf diese Art wiederum erwärmte Frischwasser wird der Brüheinheit zugeleitet, um durch Aufbrühen Kaffee zu erzeugen, der anschließend wiederum wie zuvor beschrieben gekühlt wird.

Die erfindurigsgemäße Vorrichtung weist somit den Vorteil auf, dass frisch gebrühter Kaffee in dem Kaffeekühler gekühlt und unmittelbar ausgegeben werden kann, so dass frisch gebrühter, gekühlter Kaffee erzeugt wird. Es ist insbesondere gegenüber dem Stand der Technik kein mehrmaliges Umwälzen des erzeugten Kaffees zwischen einem Aufbewahrungsgefäß und Wärmetauscher notwendig, da mittels des durch den Frischwasserkühler heruntergekühlten Frischwassers ein Herunterkühlen des Kaffees bei lediglich einmaligem Durchströmens des Kaffeekühlers ausreichend ist. Hierdurch ist weiterhin die direkte Ausgabe des frisch gebrühten, gekühlten Kaffees nach einmaligem Durchlaufen des Kaffeekühlers möglich, so dass auf Wunsch unmittelbar frisch gebrühter gekühlter Kaffee zur Verfügung steht, mit einer Zubereitungszeit, die in etwa der Zubereitungszeit für frisch gebrühten heißen Kaffee entspricht.

Darüber hinaus wird die Abwärme des zu kühlenden Kaffees zur Erwärmung des Frischwassers verwendet und das in dieser Weise erwärmte Frischwasser wird der Brüheinheit zugeführt, wo es weiter erhitzt und zum Aufbrühen von Kaffee verwendet wird. Die Abwärme beim Herunterkühlen des Kaffees wird somit zumindest teilweise zur Erhitzung bzw. Vorerhitzung des Frischwassers verwendet, so dass Energie eingespart wird.

Die Vorrichtung umfasst vorzugsweise einen Kaffeeauslauf, über den der gekühlte Kaffee in ein Behältnis, wie beispielsweise eine Tasse, ausgegeben wird.

Für eine ausreichende Kühlwirkung im Kaffeekühler sind der Frischwasserkühler und das Kühlaggregat vorzugsweise derart ausgebildet, dass das Frischwasser nach Durchströmen des Frischwasserkühlers eine Temperatur unter 7 °C, vorzugsweise unter 4 °C, bevorzugt auf eine Temperatur im Bereich von 1 °C bis 3 °C gekühlt wird. Diese Endtemperatur wird vorzugsweise unabhängig von der Ausgangstemperatur des Frischwassers erzielt, zumindest bei typischen Ausgangstemperaturen des Frischwassers im Bereich zwischen 15 °C und 30 °C. Dies kann einerseits durch eine Steuerung und entsprechende Temperaturfühler gewährleistet sein. Besonders einfach und kostensparend ist es jedoch, Frischwasserkühler und Kühlaggregat derart zu dimensionieren und auszubilden, dass ohne aktive Steuerung die vorgegebene Endtemperatur des Frischwassers zumindest in den zuvor als vorteilhaft beschriebenen Temperaturbereichen erzielt wird.

Zur Erzielung eines ausreichenden Kühleffektes ist es somit vorteilhaft, das Frischwasser mittels des Frischwasserkühlers deutlich herunterzukühlen. Hierbei besteht die Gefahr, dass das Frischwasser einfriert. Es liegt im Rahmen der Erfindung, wie bereits aus dem Stand der Technik bei Wärmetauschern bekannt, eine elektrische Zusatzheizung vorzusehen, durch welche, vorzugsweise mittels Temperaturfühlern und einer entsprechenden Steuerung, ein Einfrieren verhindert wird. Besonders vorteilhaft ist es jedoch, den Frischwasserkühler und das Kühlaggregat derart auszubilden, dass der Frischwasserkühler eine Verdampfungstemperatur > 0 °C aufweist. Hierdurch kann auf eine aufwendige elektrische Heizung und entsprechende Regelung verzichtet werden und es wird wirksam ein Einfrieren des Frischwassers verhindert.

Vorzugsweise ist bei dem Frischwasserkühler zwischen erstem und zweiten Strömungspfad ein thermisches Pufferelement angeordnet. Dieses ist vorzugsweise ein metallisches Element mit hoher Wärmekapazität, insbesondere ein Pufferelement aus Kupfer, wie beispielsweise eine Kupferplatte. Das Pufferelement wirkt aufgrund seiner thermischen Masse einer schnellen Temperaturänderung entgegen und begrenzt somit etwaige Temperaturschwankungen. Hierdurch wird eine gleichbleibendere Ausgangstemperatur des Frischwassers erzielt und auch ein Einfrieren des Frischwassers verhindert.

Bei Vorrichtungen zur Erzeugung von Kaffee stellt die Reinigung einen wichtigen Aspekt dar. Insbesondere bei in der öffentlichen Gastronomie eingesetzten Vorrichtungen sind regelmäßige Reinigungszyklen zwingend notwendig. Besonders vorteilhaft ist es, wenn die Reinigung automatisch oder nur mit geringfügigem Bedienaufwand durch einen Benutzer erfolgt.

In einer weiteren vorteilhaften Ausführungsform der erfindungsgemäßen Vorrichtung weist diese daher ein Reinigungs-Mehrwegventil auf, welches zumindest mit einem Kaffeeauslauf und einem Reinigungsauslauf fluidleitend verbindbar ist. Über den Kaffeeauslauf wird der Kaffee in ein Behältnis, beispielsweise einer Tasse, ausgegeben, wohingegen der Reinigungsauslauf in einen Auffangbehälter oder einen Abfluss mündet. Der Kaffeeauslass der Brüheinheit ist hierbei stromabwärts mit dem zweiten Strömungspfad des Kaffeekühlers und weiter stromabwärts mit dem Reinigungsmehrwegventil verbunden. Hierdurch kann wahlweise Flüssigkeit stromabwärts des zweiten Strömungspfades des Kaffeekühlers über den Kaffeeauslauf oder über den Reinigungsauslauf ausgegeben werden.

Bei dieser vorteilhaften Ausführungsform ist es somit möglich, einen Reinigungszyklus zu starten, der Teile und/oder sämtliche Strömungspfade der Vorrichtung reinigt, wobei er jedoch durch entsprechende Steuerung des Reinigungs-Mehrwegeventils die zur Reinigung verwendete Flüssigkeit nicht an den Kaffeeauslauf ausgegeben wird sondern (für den Benutzer nicht sichtbar) über den Reinigungsauslauf in einen Auffangbehälter oder direkt in den Ausguss abgegeben wird. Der Benutzer muss somit bei Durchführung eines Reinigungszyklus keinen Auffangbehälter unter den Kaffeeauslauf stellen. Insbesondere, wenn der Reinigungsauslauf direkt mit einem Ausguss verbunden ist, ist eine vollautomatische Durchführung einer Reinigung möglich, ohne dass ein Eingreifen des Benutzers notwendig ist. Beispielsweise kann solch eine Reinigung automatisch in festen Zeitabständen oder abhängig von einer vorgegebenen Anzahl von erzeugten Kaffees erfolgen.

Vorzugsweise erfolgt die Reinigung hierbei vollautomatisch mittels Steuerung durch eine Steuereinheit, welche unter anderem auch das Reinigungs-Mehrwegeventil steuert. Ebenso liegt die bereits im Stand der Technik bekannte Verwendung von Reinigungsmitteln und mehreren aufeinanderfolgenden Reinigungszyklen und gegebenenfalls Spülvorgängen im Rahmen der Erfindung.

Die Reinigung erfolgt vorzugsweise alternativ und insbesondere vorzugsweise zusätzlich mittels Durchblasen der Leitungen mit Druckluft. Hierdurch wird eine schnelle Reinigung der Leitungswege erzielt und darüber hinaus verbleibt nach der Reinigung keine Reinigungsflüssigkeit in den Leitungen. Insbesondere ist es vorteilhaft, nach jedem Kaffeeerzeugungsvorgang zumindest die Leitungswege des Kaffees mittels Druckluft zu Reinigen. Vorzugsweise erfolgt die Ausgabe bei dieser Reinigung über den Reinigungsauslauf.

Vorzugsweise ist die Vorrichtung derart ausgebildet, dass wahlweise frisch gebrühter heißer Kaffee oder frisch gebrühter gekühlter Kaffee erzeugt wird.

In einer vorteilhaften Ausführungsform weist die erfindungsgemäße Vorrichtung daher ein Frischwasser-Mehrwegeventil auf, welches zwischen Frischwasserzulauf und zweitem Strömungspfad des Frischwasserkühlers angeordnet ist. Über das Frischwasser-Mehrwegeventil ist der Frischwasserzulauf wahlweise mit dem zweiten Strömungspfad des Frischwasserkühlers und weiter wie zuvor beschrieben fluidleitend verbindbar oder unter Umgehung des zweiten Strömungspfades des Frischwasserkühlers und unter Umgehung des ersten Strömungspfades des Kaffeekühlers mit der Brüheinheit fluidleitend verbindbar.

Über das Frischwasser-Mehrwegeventil kann somit vorgegeben werden, ob das Frischwasser die beiden Kühler durchläuft oder ohne diese zu durchlaufen in die Brüheinheit geleitet wird. Ersteres erfolgt wie beschrieben zur Erzeugung von gekühltem Kaffee, letzteres zur Erzeugung von heißem Kaffee.

Alternativ und/oder zusätzlich ist es vorteilhaft, dass die Vorrichtung ein Kaffee-Mehrwegeventil umfasst, welches zwischen Kaffeeauslass der Brüheinheit und zweitem Strömungspfad des Kaffeekühlers angeordnet ist. Mittels des Kaffee-Mehrventils kann wahlweise der Kaffeeauslass der Brüheinheit mit dem zweiten Strömungspfad des Kaffeekühlers oder unter Umgehung des zweiten Strömungspfades des Kaffeekühlers mit einem Kaffeeauslauf zur Ausgabe des Kaffees in ein Behältnis fluidleitend verbunden werden. Hierdurch ist es somit möglich, bei der Herstellung von heißem Kaffee den mittels der Brüheinheit erzeugten Kaffees unter Umgehung des Kaffeekühlers zu dem Kaffeeauslauf zu leiten und hingegen bei Erzeugen von kaltem Kaffee wie zuvor beschrieben den von der Brüheinheit erzeugten heißen Kaffee über den zweiten Strömungspfad des Kaffeekühlers zu einem Kaffeeauslauf zu leiten.

Die erfindungsgemäße Vorrichtung kann in die vorbekannten Vorrichtungen zur Erzeugung von Kaffee integriert werden, insbesondere in so genannten "Kaffeevollautomaten".

Besonders vorteilhaft ist es, die erfindungsgemäße Vorrichtung in zwei baulichen Einheiten auszubilden. Die erste bauliche Einheit entspricht hierbei einer vorbekannten Vorrichtung zur Erzeugung von Kaffee, umfassend einen Frischwasserzulauf, eine Brüheinheit sowie einen Kaffeeauslauf. Der Frischwasserzulauf ist stromabwärts mit der Brüheinheit und diese stromabwärts mit dem Kaffeeauslauf fluidleitend verbunden. Wesentlich ist, dass zwischen Frischwasserzulauf und Brüheinheit ein wie zuvor beschriebenes Frischwasser-Mehrwegeventil angeordnet ist, mittels dessen das Frischwasser wahlweise zu einem Frischwasserausgang der ersten Einheit oder zu der Brüheinheit geleitet werden kann. Die erste Baueinheit weist weiterhin einen Eingang für gekühltes Frischwasser auf, welcher fluidleitend mit der Brüheinheit verbunden ist. Weiterhin weist die erste Baueinheit ein wie zuvor beschriebenes Kaffee-Mehrwegeventil auf, mittels dessen der von der Brüheinheit erzeugte Kaffee wahlweise zu einem Kaffeeausgang der ersten Einheit oder zu dem Kaffeeauslauf geleitet werden kann. Weiterhin weist die erste Einheit einen Kaffeeeingang auf, welcher fluidleitend mit dem Kaffeeauslauf verbunden ist.

Die zweite Einheit umfasst einen Frischwassereingang, welcher mit dem Frischwasserausgang der ersten Baueinheit fluidleitend verbunden ist. Der Frischwassereingang ist stromabwärts mit dem zweiten Strömungspfad des Frischwasserkühlers fluidleitend verbunden, weiterhin stromabwärts mit dem ersten Strömungspfad des Kaffeekühlers und schließlich mit einem Frischwasserausgang der zweiten Einheit fluidleitend verbunden. Der Frischwasserausgang der zweiten Einheit ist wiederum fluidleitend mit dem Frischwassereingang der ersten Einheit verbunden.

Die zweite Einheit umfasst weiterhin einen Kaffeeeingang, welcher fluidleitend mit dem Kaffeeausgang der ersten Einheit verbunden ist und stromabwärts hiervon mit dem zweiten Strömungspfad des Kaffeekühlers und weiterhin stromabwärts mit einem Kaffeeausgang der zweiten Einheit, gegebenenfalls unter Zwischenschaltung eines wie zuvor beschriebenen Reinigungs-Mehrventils. Der Kaffeeausgang der zweiten Einheit ist mit dem Kaffeeeingang der ersten Einheit verbunden.

Die zweite Einheit umfasst weiterhin das Kühlaggregat, dessen Kühlmittelkreislauf mit dem ersten Strömungspfad des Frischwasserkühlers fluidleitend verbunden ist.

Beide Einheiten sind vorzugsweise als eigenständige Einheiten ausgebildet, insbesondere in jeweils einem Gehäuse angeordnet und weisen vorzugsweise jeweils die notwendigen Versorgungseinrichtungen, wie beispielsweise elektrische Anschlüsse und gegebenenfalls notwendige Steuereinheiten und Steueranschlüsse auf.

Hierdurch ergibt sich der Vorteil, dass die erste Einheit als vollwertiger Kaffeeautomat verwendbar ist und zusätzlich bei Bedarf durch die zweite Einheit, welche beispielsweise zu einem späteren Zeitpunkt separat erworben werden kann, aufgerüstet werden kann, so dass mit beiden Einheiten zusammen zusätzlich auch frisch gebrühter kalter Kaffee herstellbar ist.

Wie eingangs beschrieben, werden häufig Kaffeemischgetränke erzeugt, beispielsweise unter Zugabe eines weiteren flüssigen Lebensmittels, wie beispielsweise Milch oder Sirup. Hierbei ist es bekannt, dass Vorrichtungen zum Herstellen von Kaffee einen Kühlraum zur Kühlung eines flüssigen Lebensmittels umfassen, welcher mittels eines Kühlaggregates gekühlt wird. Es sind beispielsweise integrierte Milchkühler oder Milchkühler als Beistellgeräte bekannt, welche neben den entsprechenden Vorrichtungen zum Kühlen der aufbewahrten Milch Fördermittel wie beispielsweise Pumpen umfassen, um bei Bedarf Milch gegebenenfalls unter weiterer Verarbeitung, wie beispielsweise aufschäumen, auszugeben.

In einer vorteilhaften Ausführungsform umfasst die erfindungsgemäße Vorrichtung daher einen Kühlraum zur Kühlung eines flüssigen Lebensmittels, wobei der Kühlmittelkreislauf des Kühlaggregates thermisch mit dem Kühlraum verbunden und derart ausgebildet ist, dass mittels des Kühlmittels sowohl der Kühlraum, als auch der erste Strömungspfad des Frischwasserkühlers kühlbar sind. Hierdurch wird somit durch die Verwendung lediglich eines Kühlaggregates sowohl das flüssige Lebensmittel im Kühlraum, als auch das Frischwasser gekühlt. Dies ermöglicht eine kostensparende Herstellung und eine energiesparende Verwendung.

Besonders vorteilhaft ist es, dass der Kühlmittelkreislauf des Kühlaggregates mit mindestens zwei Verdampfern fluidleitend verbunden ist, wobei ausgehend von einem Kompressor dieser im Kühlmittelkreislauf stromabwärts mit einem Verflüssiger, weiter stromabwärts mit einem ersten Verdampfer zur Kühlung des Kühlraums und weiter stromabwärts mit dem ersten Strömungspfad des Frischwasserkühlers als zweitem Verdampfer fluidleitend verbunden ist. Dies ist darin begründet, dass typischerweise bezüglich der Kühlung des Kühlraums eine niedrigere Temperatur des Kühlmittels vorteilhaft ist, verglichen mit der Kühlmitteltemperatur für eine optimale Kühlung des Frischwassers bei Vermeidung des Einfrierens des Frischwassers.

Insbesondere ist es daher vorteilhaft, dass der erste Verdampfer eine Verdampfertemperatur unter 0 °C aufweist und/oder der zweite Verdampfer eine Verdampfertemperatur über 0° C aufweist.

Die Erfindung betrifft weiterhin ein Verfahren zum Erzeugen von gekühltem Kaffee gemäß Anspruch 10. Das Verfahren umfasst folgende Verfahrensschritte: In einer Brüheinheit wird heißer Kaffee erzeugt. Der Kaffee wird mittels eines als Wärmetauscher ausgebildeten Kaffeekühlers und eines Kühlaggregates gekühlt.

Wesentlich ist, dass Frischwasser mittels des Kühlaggregates gekühlt wird und das gekühlte Frischwasser durch einen ersten Strömungspfad des Kaffeekühlers geleitet wird und der Kaffee durch einen zweiten Strömungspfad des Kaffeekühlers geleitet wird, wobei erster und zweiter Strömungspfad thermisch, jedoch nicht fluidleitend verbunden sind. Das Frischwasser wird stromabwärts des Kaffeekühlers zu der Brüheinheit geleitet, zum Erzeugen von Kaffee aus dem Frischwasser. Bei dem erfindungsgemäßen Verfahren wird somit der Kaffee mittelbar durch das Kühlaggregat über das gekühlte Frischwasser gekühlt.

Vorteilhafterweise wird das erfindungsgemäße Verfahren auf einer erfindungsgemäßen Vorrichtung, insbesondere gemäß mindestens einem der Ansprüche 1 bis 9 ausgeführt. Vorzugsweise wird das Frischwasser mittels eines als weiterer Wärmetauscher ausgebildeten Frischwasserkühlers gekühlt, wobei ein Kühlmittelkreislauf zwischen Kühlaggregat und einem ersten Strömungspfad des Frischwasserkühlers erfolgt und stromabwärts eines Frischwasserzulaufes das Frischwasser durch einen zweiten Strömungspfad des Frischwasserkühlers geleitet wird. Erster und zweiter Strömungspfad sind hierbei thermisch, jedoch nicht fluidleitend verbunden.

In einer weiteren vorzugsweisen Ausführungsform des erfindungsgemäßen Verfahrens wird das Frischwasser nach Durchströmen des Frischwasserkühlers auf eine Temperatur unter 7 °C, vorzugsweise unter 4 °C, bevorzugt auf eine Temperatur im Bereich von 1 bis 3 °C gekühlt, für eine beliebige Ausgangstemperatur des Frischwassers im Bereich zwischen 15 °C und 30 °C. Vorteilhafterweise wird zur Reinigung der zweite Strömungspfad des Kaffeekühlers fluidleitend mit einem Reinigungsauslauf verbunden und zur Kaffeeausgabe wird der zweite Strömungspfad des Kaffeekühlers fluidleitend mit einem Kaffeeauslauf verbunden.

Bei erzeugen eines gekühlten Kaffees kann unmittelbar nach Starten des Vorgangs unerwünschte Flüssigkeit aus dem Kaffeeauslauf austreten. Dies kann darin begründet sein, dass noch Reinigungsflüssigkeit und/oder Wasser in Leitungen der Vorrichtungen verblieben ist und/oder dass zwar bereits Kaffee an dem Kaffeeauslauf vorhanden ist, dieser jedoch noch nicht die gewünschte Brühqualität oder noch nicht die gewünschte Temperatur aufweist.

In einer vorzugsweisen Ausgestaltung des erfindungsgemäßen Verfahrens wird daher zur Kaffeeausgabe zunächst für eine vorbestimmte Zeitdauer der zweite Strömungspfad des Kaffeekühlers fluidleitend mit einem Reinigungsauslauf und anschließend mit einem Kaffeeauslauf verbunden. Hierdurch wird somit unbemerkt von dem Benutzer die unerwünschte Flüssigkeit über den Reinigungsauslauf entsorgt. Vorzugsweise erfolgt bei Aufbrühen eines Kaffees zunächst eine Ausgabe über den Reinigungsauslauf, vorzugsweise für eine Zeitdauer im Bereich zwischen 2 s und 30 s, insbesondere im Bereich zwischen 5 s und 15 s. Hierdurch ist gewährleistet, dass einerseits der Benutzer nicht zu lange auf den gekühlten Kaffee warten muss und andererseits eine ausreichende Spülung bzw. Ausgabe von verbliebener Spülflüssigkeit oder Kaffee aus vorhergehenden Kaffeeerzeugungsvorgängen in den Reinigungsauslauf erfolgt.

Die erfindungsgemäße Vorrichtung und das erfindungsgemäße Verfahren sind vorzugsweise derart ausgebildet, dass frisch gebrühter, gekühlter Kaffee mit einer Temperatur von etwa 10 °C ausgegeben wird. Diese Temperatur wird als besonders angenehm empfunden.

Insbesondere ist es vorteilhaft, wenn die erfindungsgemäße Vorrichtung eine Steuereinheit umfasst, mittels derer ein gewünschtes Mischgetränk vorgebbar ist und die Steuereinheit die Vorrichtung, insbesondere das Kühlaggregat derart steuert, dass die Endtemperatur des Mischgetränkes bei etwa 10 °C liegt.

Der Frischwasserkühler und/oder der Kaffeekühler sind vorzugsweise aus Kupfer ausgebildet, da Kupfer lebensmitteltechnisch unbedenklich ist und eine sehr gute Wärmeleitfähigkeit aufweist. Das Kühlaggregat weist vorzugsweise einen Kühlkompressor mit einer Leistung über 150 W, vorzugsweise über 180 W, insbesondere etwa 200 W auf, um eine ausreichende Kühlwirkung zu erzielen.

Wesentlich bei der erfindungsgemäßen Vorrichtung ist, dass der Kaffee nach Durchströmen des zweiten Strömungspfades des Kaffeekühlers ausreichend heruntergekühlt ist und die vorgegebene Temperatur aufweist. Vorzugsweise ist der Kaffeekühler derart ausgebildet, dass zumindest der zweite Strömungspfad des Kaffeekühlers das geringstmögliche Volumen aufweist, mit dem eine ausreichende Kühlung sichergestellt ist. Hierdurch ergibt sich der Vorteil, dass einerseits eine ausreichende Kühlung sichergestellt ist und andererseits das Flüssigkeitsvolumen, welches nach Zubereitung eines Kaffees in dem Kühler verbleibt, möglichst gering ist und somit der Reinigungsvorgang verkürzt wird und auch ein eventueller Vorlauf bei Erzeugen eines Kaffees verringert wird.

Der Kaffeekühler weist vorzugsweise zumindest bei dem zweiten Strömungspfad eine Länge im Bereich von 1 m und 8 m auf, bei einem Durchmesser im Bereich von 1 mm und 4 mm. Vorzugsweise ist der Kaffeekühler derart symmetrisch ausgebildet, dass erster und zweiter Strömungspfad die gleiche Länge aufweisen, insbesondere bevorzugt die gleiche Länge und den gleichen Durchmesser. Der Kaffeekühler kann dabei beispielsweise als gleichströmiger Wärmetauscher ausgebildet sein. Besonders bevorzugt ist jedoch aufgrund des besseren Wärmeaustausches die Ausbildung als gegenläufiger Wärmetauscher.

Der Frischwasserkühler weist vorzugsweise eine Länge zumindest des ersten Strömungspfades im Bereich von 3 m bis 8 m bei einem vorzugsweisen Durchmesser im Bereich von 1 mm bis 7 mm auf, um eine ausreichende Kühlung des Frischwassers zu gewährleisten. Auch der Frischwasserkühler ist vorzugsweise als symmetrischer Wärmetauscher ausgebildet, so dass beide Strömungspfade die gleiche Länge und bevorzugt den gleichen Durchmesser aufweisen. Ebenso liegt die Ausbildung als gleichströmiger Wärmetauscher im Rahmen der Erfindung, bevorzugt ist der Frischwasserkühler als gegenströmiger Wärmetauscher ausgebildet.

Ebenso liegt jedoch auch die Ausbildung von Frischwasserkühler und/oder Kaffeekühler in anderen vorbekannten Bauformen von Wärmetauschern im Rahmen der Erfindung.

Vorzugsweise erfolgt eine Reinigung der Vorrichtung derart, dass Frischwasser und/oder Reinigungsmittel zumindest die Brüheinheit und weiter stromabwärts den zweiten Strömungspfad des Kaffeekühlers durchläuft. Hiervon ausgehend fließt die Flüssigkeit über das Reinigungs-Mehrwegventil in den Reinigungsauslauf. Ebenso kann die Flüssigkeit über den Kaffeeauslauf ausgegeben werden.

Weiterhin liegt es im Rahmen der Erfindung, zusätzlich oder anstelle der Reinigungsflüssigkeit eine Reinigung mittels Durchblasen mit Druckluft durchzuführen.

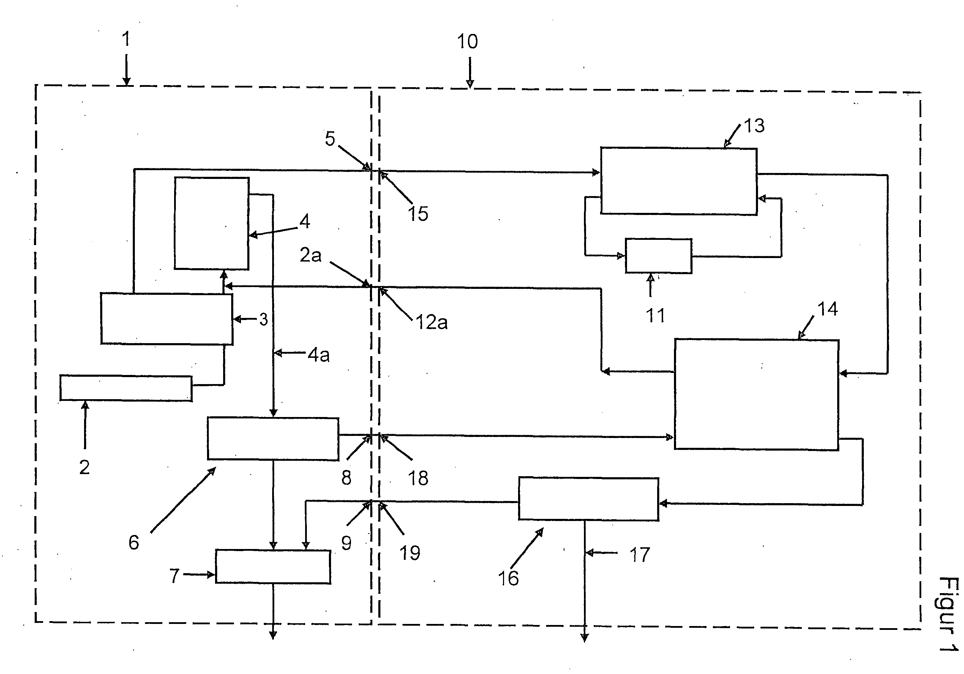

Weitere Merkmale und vorzugsweise Ausführungsformen der Erfindung werden im Folgenden anhand von Figur 1 erläutert.
- Figur 1: zeigt die schematische Darstellung einer erfindungsgemäßen Vorrichtung, welche als zwei Einheiten realisiert ist.

Die erste Einheit stellt eine Kaffeemaschine 1 dar. Diese weist einen Frischwasserzulauf 2 auf, welcher über ein Frischwassermehrwegeventil 3 wahlweise fluidleitend mit einer Brüheinheit 4 oder mit einem Frischwasserausgang 5 verbindbar ist. Die Brüheinheit 4 ist wie bei Kaffeevollautomaten an sich bekannt ausgebildet und weist einen Kaffeeauslass 4a auf, welcher stromabwärts fluidleitend mit einem Kaffeemehrwegeventil 6 fluidleitend verbunden ist.

Über das Kaffee-Mehrwegeventil 6 kann wahlweise der Kaffee an einen Kaffeeauslauf 7 oder an einen Kaffeeausgang 8 geleitet werden. Die Kaffeemaschine 1 weist weiterhin einen Kaffeeeingang 9 auf, welcher fluidleitend mit dem Kaffeeauslauf 7 verbunden ist.

Zusätzlich weist die Kaffeemaschine 1 einen zweiten Frischwasserzulauf 2a auf, welcher fluidleitend mit der Brüheinheit 4, jedoch unter Umgehung des Frischwasser-Mehrwegeventils 3 verbunden ist.

Die zweite Einheit stellt eine Kühleinheit 10 dar. Diese umfasst einen Frischwassereingang 15, der fluidleitend mit dem Frischwasserausgang 5 verbunden ist; einen Frischwasserausgang 12a, der fluidleitend mit dem zweiten Frischwasserzulauf 2a verbunden ist; einen Kaffeeeingang 18, der fluidleitend mit dem Kaffeeausgang 8 verbunden ist und einen Kaffeeausgang 19, der fluidleitend mit dem Kaffeeeingang 9 verbunden ist.

Die Kühleinheit 10 umfasst weiterhin ein Kälteaggregat 11, einen als Wärmetauscher ausgebildeten Frischwasserkühler 13, einen ebenfalls als Wärmetauscher ausgebildeten Kaffeekühler 14 und ein Reinigungs-Mehrwegeventil 16.

Ausgehend von dem Frischwassereingang 15 ist dieser stromabwärts mit einem zweiten Strömungspfad des Frischwasserkühlers 13 verbunden, weiterhin stromabwärts mit einem ersten Strömungspfad des Kaffeekühlers 14 und weiterhin stromabwärts mit dem Frischwasserausgang 12a fluidleitend verbunden.

Der Kaffeeeingang 18 ist stromabwärts mit dem zweiten Strömungspfad des Kaffeekühlers 14 und weiter stromabwärts mit dem Reinigungs-Mehrwegeventil 16 fluidleitend verbunden. Mittels des Reinigungs-Mehrwegeventils 16 ist der Kaffee wahlweise an den Kaffeeausgang 19 oder an einen Reinigungsauslauf 17 zuleitbar, wobei der Reinigungsauslauf 17 in einen Abfluss mündet.

Frischwasser-Mehrwegeventil 3, Kaffee-Mehrwegeventil 6 und Reinigungs-Mehrwegeventil 16 sind jeweils als 3/2-Ventile ausgeführt, welche mittels einer Steuereinheit steuerbar sind.

Die Kaffeemaschine 1 weist weiterhin eine nicht dargestellte Steuereinheit auf, welche sowohl die Komponenten der Kaffeemaschine 1, als auch über eine Steuerschnittstelle die Komponenten der Kühleinheit 10 steuert.

Wählt der Benutzer beispielsweise heißen Kaffee aus, so wird der Frischwasserzulauf 2 unter Umgehung der Kühleinheit mit der Brüheinheit 4 verbunden und diese unter Umgehung der Kühleinheit fluidleitend mit dem Kaffeeauslauf 7. Anschließend wird in an sich bekannter Weise durch Zuführen von Frischwasser zu der Brüheinheit Kaffee erzeugt und aus dem Kaffeeauslauf ausgegeben.

Wählt der Benutzer hingegen gekühlten Kaffee aus, so wird der Frischwasserzulauf 2 über das Frischwasser-Mehrwegventil 3 und der Kaffeeauslauf 7 über das Kaffee-Mehrwegeventil 6 mit der Kühleinheit 10 fluidleitend verbunden.

Frischwasser fließt somit von dem Frischwassereintritt über Frischwasserausgang 5 und Frischwassereingang 15 durch den zweiten Steuerungspfad des Frischwasserkühlers 13. Das Kälteaggregat 11 ist über einen Kühlmittelreislauf fluidleitend mit dem ersten Strömungspfad des Frischwasserkühlers 13 verbunden, so dass das Frischwasser nach Durchströmen des Frischwasserkühlers eine Temperatur von etwa 2 °C aufweist. Anschließend durchströmt das Frischwasser den ersten Strömungspfad des Kaffeekühlers 14 und wird nach Durchströmen desselben über den Frischwasserausgang 12a und den zweiten Frischwasserzulauf 2a der Brüheinheit 4 zugeführt. Diese erzeugt Kaffee aus dem Frischwasser in an sich bekannter Weise und gibt diesen über den Kaffeeauslass 4a aus, worauf der Kaffee über das Kaffee-Mehrwegeventil 6, den Kaffeeausgang 8 und den Kaffeeeingang 18 durch den zweiten Strömungspfad des Kaffeekühlers 14 geleitet wird. Nach Durchströmen desselben wird der Kaffee zunächst über das Reinigungs-Mehrwegeventil 16 in den Reinigungsauslauf 17 geleitet. Dies ist jedoch nur für eine Zeitdauer im Bereich von 5 s bis 15 s notwendig, um eventuelle Rückstände von Reinigungsmittel zu beseitigen und eine korrekte Funktion der Kühlung zu erzielen. Anschließend erfolgt die Weiterleitung des Kaffees über das Reinigungs-Mehrwegeventil 17, den Kaffeeausgang 19 und den Kaffeeeingang 9 zu dem Kaffeeauslauf 7, so dass gekühlter Kaffee ausgegeben wird.

## Patentansprüche

1. Vorrichtung (1, 10) zum Erzeugen von gekühltem Kaffee,
umfassend
eine Brüheinheit (4) zum Erzeugen von Kaffee, ein Kühlaggregat (11) und einen als Wärmetauscher ausgebildeten Kaffeekühler (14), wobei der Kaffeekühler (14) mindestens einen ersten und einen zweiten Strömungspfad aufweist, welche thermisch, jedoch nicht fluidleitend verbunden sind,
wobei der erste Strömungspfad mit einem Kühlmittel durchströmbar ist und der zweite Strömungspfad fluidleitend mit einem Kaffeeauslass (5) der Brüheinheit (4) verbunden ist,
**dadurch gekennzeichnet,**
**dass** die Vorrichtung weiterhin einen Frischwasserzulauf (2) und einen als weiteren Wärmetauscher ausgebildeten Frischwasserkühler (13) umfasst,
wobei der Frischwasserkühler (13) mindestens einen ersten und einen zweiten Strömungspfad aufweist, welche thermisch, jedoch nicht fluidleitend verbunden sind und
der Frischwasserzulauf (2) stromabwärts mit dem zweiten Strömungspfad des Frischwasserkühlers (13), weiter stromabwärts mit dem ersten Strömungspfad des Kaffeekühlers (14) und weiter stromabwärts mit der Brüheinheit (4) fluidleitend verbunden ist und
der erste Strömungspfad des Frischwasserkühlers (13) mit einem Kühlmittelkreislauf des Kühlaggregates fluidleitend verbunden ist.

2. Vorrichtung (1, 10) nach Anspruch 1,
**dadurch gekennzeichnet,**
**dass** Frischwasserkühler (13) und Kühlaggregat (11) derart ausgebildet sind, dass das Frischwasser nach Durchströmen des Frischwasserkühlers (13) auf eine Temperatur unter 7°C, vorzugsweise unter 4°C, bevorzugt auf eine Temperatur im Bereich von 1°C bis 3°C kühlbar ist, für eine beliebige Ausgangstemperatur des Frischwassers im Bereich zwischen 15°C und 30°C.

3. Vorrichtung (1, 10) nach mindestens einem der vorangegangenen Ansprüche,
**dadurch gekennzeichnet,**
**dass** Kühlaggregat (11) und Frischwasserkühler (13) derart ausgebildet sind, dass der Frischwasserkühler (13) eine Verdampfungstemperatur größer 0°C aufweist.

4. Vorrichtung (1, 10) nach mindestens einem der vorangegangenen Ansprüche,
**dadurch gekennzeichnet,**
**dass** bei dem Frischwasserkühler (13) zwischen erstem und zweitem Strömungspfad ein thermisches Pufferelement angeordnet ist, vorzugsweise ein metallisches Element mit hoher Wärmekapazität, bevorzugt aus Kupfer.

5. Vorrichtung (1, 10) nach mindestens einem der vorangegangenen Ansprüche,
**dadurch gekennzeichnet,**
**dass** die Vorrichtung ein Reinigungs-Mehrwegeventil (16) umfasst, welches zumindest mit einem Kaffeeauslauf (7) und einem Reinigungsauslauf (17) fluidleitend verbindbar ist, wobei
der Kaffeauslass (4a) der Brüheinheit (4) stromabwärts mit dem zweiten Strömungspfad des Kaffeekühlers (14) und weiter stromabwärts mit dem Reinigungs-Mehrwegventil (16) verbunden ist, so dass wahlweise Flüssigkeit stromabwärts des zweiten Strömungspfades des Kaffeekühlers (14) über den Kaffeeauslauf (4a) oder über den Reinigungsauslauf (17) ausgebbar ist.

6. Vorrichtung (1, 10) nach mindestens einem der vorangegangenen Ansprüche,
**dadurch gekennzeichnet,**
**dass** die Vorrichtung ein Frischwasser-Mehrwegeventil (3) umfasst, zwischen Frischwasserzulauf (2) und zweitem Strömungspfad des Frischwasserkühlers (13) angeordnet ist, so dass der Frischwasserzulauf (2) wahlweise mit dem zweiten Strömungspfad des Frischwasserkühlers (13) fluidleitend verbindbar oder unter Umgehung des zweiten Strömungspfades des Frischwasserkühlers (13) und unter Umgehung des ersten Strömungspfades des Kaffeekühlers (14) mit der Brüheinheit (4) fluidleitend verbindbar ist.

7. Vorrichtung (1, 10) nach mindestens einem der vorangegangenen Ansprüche,
**dadurch gekennzeichnet,**
**dass** die Vorrichtung ein Kaffee-Mehrwegeventil (6) umfasst, welches zwischen Kaffeeauslass (8) der Brüheinheit und zweitem Strömungspfad des Kaffeekühlers (14) angeordnet ist, so dass der Kaffeeauslass (8) der Brüheinheit (4) wahlweise mit dem zweitem Strömungspfad des Kaffeekühlers (14) fluidleitend verbindbar ist oder unter Umgehung des zweitem Strömungspfades des Kaffeekühlers (14) mit einem Kaffeeauslauf (7) fluidleitend verbindbar ist.

8. Vorrichtung (1, 10) nach mindestens einem der vorangegangenen Ansprüche,
**dadurch gekennzeichnet,**
**dass** die Vorrichtung einen Kühlraum zur Kühlung eines flüssigen Lebensmittels umfasst, wobei der Kühlmittelkreislauf des Kühlaggregates (11) thermisch mit dem Kühlraum verbunden und derart ausgebildet ist, dass mittels des Kühlmittels sowohl der Kühlraum, als auch der erste Strömungspfad des Frischwasserkühlers (13) kühlbar sind.

9. Vorrichtung (1, 10) nach Anspruch 8,
**dadurch gekennzeichnet,**
**dass** der Kühlmittelkreislauf des Kühlaggregates (11) mit mindestens zwei Verdampfern fluidleitend verbunden ist, wobei ausgehend von einem Kompressor dieser im Kühlmittelkreislauf stromabwärts mit einem Verflüssiger, weiter stromabwärts mit einem ersten Verdampfer zur Kühlung des Kühlraumes und weiter stromabwärts mit dem ersten Strömungspfad des Frischwasserkühlers (13) als zweitem Verdampfer fluidleitend verbunden ist, vorzugsweise,
**dass** der erste Verdampfer eine Verdampfertemperatur unter 0°C aufweist und/oder der zweite Verdampfer eine Verdampfertemperatur über 0°C aufweist.

10. Verfahren zum Erzeugen von gekühltem Kaffee,
folgende Verfahrensschritte umfassend:
- Erzeugen von heißem Kaffee in einer Brüheinheit (4),
- Kühlen des Kaffees mittels eines als Wärmetauscher ausgebildeten Kaffeekühlers (14) und eines Kühlaggregates (11),
**dadurch gekennzeichnet,**
**dass** Frischwasser mittels des Kühlaggregates (11) gekühlt wird, dass das gekühlte Frischwasser durch einen ersten Strömungspfad des Kaffeekühlers (14) geleitet wird und der Kaffe durch einen zweiten Strömungspfad des Kaffeekühlers (14) geleitet wird, wobei erster und zweiter Strömungspfad thermisch, jedoch nicht fluidleitend verbunden sind und
**dass** das Frischwasser stromabwärts des Kaffeekühlers (14) zu der Brüheinheit (4) geleitet wird, zum Erzeugen von Kaffee aus dem Frischwasser.

11. Verfahren nach Anspruch 10,
**dadurch gekennzeichnet,**
**dass** das Frischwasser mittels eines als weiterer Wärmetauscher ausgebildeten Frischwasserkühlers (13) gekühlt wird, wobei ein Kühlmittelkreislauf zwischen Kühlaggregat (11) und einem ersten Strömungspfad des Frischwasserkühlers (13) erfolgt und stromabwärts eines Frischwasserzulaufes (2) das Frischwasser durch einen zweiten Strömungspfad des Frischwasserkühlers geleitet wird, wobei erster und zweiter Strömungspfad thermisch, jedoch nicht fluidleitend verbunden sind.

12. Verfahren nach mindestens einem der Ansprüche 10 bis 11,
**dadurch gekennzeichnet,**
**dass** das Frischwasser nach Durchströmen des Frischwasserkühlers auf eine Temperatur unter 7°C, vorzugsweise unter 4°C, bevorzugt auf eine Temperatur im Bereich von 1°C bis 3°C gekühlt wird, für eine beliebige Ausgangstemperatur des Frischwassers zumindest im Bereich zwischen 15°C und 30°C.

13. Verfahren nach mindestens einem der Ansprüche 10 bis 12,
**dadurch gekennzeichnet,**
**dass** zur Reinigung der zweite Strömungspfad des Kaffeekühlers (14) mit einem Reinigungsauslauf fluidleitend verbunden und zur Kaffeeausgabe (8) der zweite Strömungspfad des Kaffeekühlers (14) mit einem Kaffeauslauf (7) fluidleitend verbunden wird.

14. Verfahren nach mindestens einem der Ansprüche 10 bis 13,
**dadurch gekennzeichnet,**
**dass** zur Kaffeausgabe (8) zunächst für eine vorbestimmte Zeitdauer der zweite Strömungspfad des Kaffeekühlers (14) fluidleitend mit einem Reinigungsauslauf (17) und anschließend mit einem Kaffeauslauf (7) fluidleitend verbunden wird.

15. Verfahren nach mindestens einem der Ansprüche 10 bis 14,
**dadurch gekennzeichnet,**
**dass** zur Ausgabe von heißem Kaffee das Frischwasser unter Umgehung des zweiten Strömungspfades des Frischwasserkühlers (13) und unter Umgehung des ersten Strömungspfades des Kaffeekühlers (14) zu der Brüheinheit (4) geleitet wird und/oder der Kaffee ausgehend von der Brüheinheit (4) unter Umgehung des zweiten Strömungspfades des Kaffeekühlers (14) zu dem Kaffeeauslauf (7) geleitet wird.

## Claims

1. Apparatus (1, 10) for producing cooled coffee including a brewing unit (4) for producing coffee, a cooling unit (11) and a coffee cooler (14) constructed as a heat exchanger, wherein the coffee cooler (14) has at least one first and one second flow path, which are thermally but not fluid conductively connected, wherein a cooling medium can flow through the first flow path and the second flow path is fluid conductively connected to a coffee outlet (5) of the brewing unit (4), **characterised in that** the apparatus further includes a fresh water inlet (2) and a fresh water cooler (13) constructed as a further heat exchanger, wherein the fresh water cooler (13) has at least one first and one second flow path, which are thermally but not fluid conductively connected, and the fresh water inlet (2) is fluid conductively connected downstream to the second flow path of the fresh water cooler (13), further downstream to the first flow path of the coffee cooler (14) and further downstream to the brewing unit (4) and the first flow path of the fresh water cooler (13) is fluid conductively connected to a cooling medium circuit of the cooling unit.

2. Apparatus (1, 10) as claimed in Claim 1, **characterised in that** the fresh water cooler (13) and cooling unit (11) are constructed so that after flowing through the fresh water cooler (13) the fresh water is coolable to a temperature below 7°C, preferably below 4°C, preferably to a temperature in the range of 1°C to 3°C, for any starting temperature of the fresh water in the range between 15°C and 30°C.

3. Apparatus (1, 10) as claimed in at least one of the preceding claims, **characterised in that** the cooling unit (11) and fresh water cooler (13) are constructed so that the fresh water cooler (13) has an evaporation temperature greater than 0°C.

4. Apparatus (1, 10) as claimed in at least one of the preceding claims, **characterised in that** arranged in the fresh water cooler between the first and second flow path there is a thermal buffer element, preferably a metallic element with high thermal capacity, preferably of copper.

5. Apparatus (1, 10) as claimed in at least one of the preceding claims, **characterised in that** the apparatus includes a cleaning selector valve (16), which is fluid conductively connectable at least to a coffee outlet (7) and a cleaning outlet (17), wherein the coffee outlet (4a) of the brewing unit (4) is connected downstream to the second flow path of the coffee cooler (14) and further downstream to the cleaning selector valve (16) so that liquid is selectively dischargeable downstream of the second flow path of the coffee cooler (14) via the coffee outlet (4a) or via the cleaning outlet (17).

6. Apparatus (1, 10) as claimed in at least one of the preceding claims, **characterised in that** the apparatus includes a fresh water selector valve (3), which is arranged between the fresh water inlet (2) and the second flow path of the fresh water cooler (13) so that the fresh water inlet (2) is selectively fluid conductively connectable to the second flow path of the fresh water cooler or is fluid conductively connectable to the brewing unit (4) bypassing the second flow path of the fresh water cooler (13) and bypassing the first flow path of the coffee cooler (14).

7. Apparatus (1, 10) as claimed in at least one of the preceding claims, **characterised in that** the apparatus includes a coffee selector valve (6), which is arranged between the coffee outlet (8) of the brewing unit and second flow path of the coffee cooler (14) so that the coffee outlet (8) of the brewing unit (4) is selectively fluid conductively connectable to the second flow path of the coffee cooler (14) or is fluid conductively connectable to a coffee outlet (7) bypassing the second flow path of the coffee cooler (14).

8. Apparatus (1, 10) as claimed in at least one of the preceding claims, **characterised in that** the apparatus includes a cooling space for cooling a liquid foodstuff, wherein the cooling medium circuit of the cooling unit (11) is thermally connected to the cooling space and constructed so that both the cooling space and also the first flow path of the fresh water cooler (13) are coolable by means of the cooling medium.

9. Apparatus (1, 10) as claimed in Claim 8, **characterised in that** the cooling medium circuit of the cooling unit (11) is fluid conductively connected to at least two vaporisers, wherein starting from a compressor the latter is fluid conductively connected in the cooling medium circuit downstream to a condenser, further downstream to a first vaporiser for cooling the cooling space and further downstream to the first flow path of the fresh water cooler (13) as the second vaporiser, preferably that the first vaporiser has a vaporisation temperature below 0°C and/or the second vaporiser has a vaporisation temperature above 0°C.

10. A method of producing cooled coffee including the following method steps:
- producing hot coffee in a brewing unit (4),
- cooling the coffee by means of a coffee cooler (14) constructed as a heat exchanger and cooling unit (11),
**characterised in that** fresh water is cooled by means of the cooling unit (11), that the cooled fresh water is conducted through a first flow path of the coffee cooler (14) and the coffee is conducted through a second flow path of the coffee cooler (14), wherein the first and second flow paths are thermally but not fluid conductively connected and that the fresh water is conducted downstream of the coffee cooler (14) to the brewing unit (4) for producing coffee from the fresh water.

11. A method as claimed in Claim 10, **characterised in that** the fresh water is cooled by means of a fresh water cooler (13) constructed as a further heat exchanger, wherein a cooling medium circuit occurs between the cooling unit (11) and a first flow path of the fresh water cooler (13) and downstream of a fresh water inlet (2) the fresh water is conducted through a second flow path of the fresh water cooler, wherein the first and second flow paths are thermally but not fluid conductively connected.

12. A method as claimed in at least one of Claims 10 to 11, **characterised in that** after flowing through the fresh water cooler the fresh water is cooled to a temperature below 7°C, preferably below 4°C, preferably to a temperature in the range of 1°C to 3°C, for any starting temperature of the fresh water, at least in the range between 15°C and 30°C.

13. A method as claimed in at least one of Claims 10 to 12, **characterised in that** for the purpose of cleaning the second flow path of the coffee cooler (14) is fluid conductively connected to a cleaning outlet and for the purpose of dispensing coffee (8) the second flow path of the coffee cooler (14) is fluid conductively connected to a coffee outlet (7).

14. A method as claimed in at least one of Claims 10 to 13, **characterised in that** for the purpose of dispensing coffee (8), the second flow path of the coffee cooler (14) is initially fluid conductively connected for a predetermined period of time to a cleaning outlet (17) and then fluid conductively connected to a coffee outlet (7).

15. A method as claimed in at least one of Claims 10 to 14, **characterised in that** for the purpose of dispensing hot coffee the fresh water is conducted to the brewing unit (4) bypassing the second flow path of the fresh water cooler (13) and bypassing the first flow path of the coffee cooler (14) and/or the coffee is conducted, starting from the brewing unit (4) to the coffee outlet (7) bypassing the second flow path of the coffee cooler (14).

## Revendications

1. Dispositif (1, 10) destiné à préparer du café refroidi, comprenant
une unité d'infusion (4) pour la préparation de café, un groupe réfrigérant (11) et un refroidisseur de café (14) réalisé sous la forme d'un échangeur thermique, le refroidisseur de café (14) comportant au moins un premier et un deuxième trajet d'écoulement, lesquels sont reliés par voie thermique mais non pas conductrice de fluide,
le premier trajet d'écoulement pouvant être traversé par un agent réfrigérant et le deuxième trajet d'écoulement étant relié de manière conductrice de fluide avec une sortie de café (5) de l'unité d'infusion (4),
**caractérisé en ce que** le dispositif comprend par ailleurs une arrivée d'eau fraîche (2) et un refroidisseur d'eau fraîche (13) réalisé sous la forme d'un échangeur thermique supplémentaire,
le refroidisseur d'eau fraîche (13) comportant au moins un premier et un deuxième trajet d'écoulement, lesquels sont reliés par voie thermique mais non pas conductrice de fluide et l'arrivée d'eau fraîche (2) est reliée par voie conductrice de fluide, en aval avec le deuxième trajet d'écoulement du refroidisseur d'eau fraîche (13), plus loin en aval, avec le premier trajet d'écoulement du refroidisseur de café (14) et plus loin en aval avec l'unité d'infusion (4) et le premier trajet d'écoulement du refroidisseur d'eau fraîche (13) est relié par voie conductrice de fluide avec un circuit d'agent réfrigérant du groupe réfrigérant.

2. Dispositif (1, 10) selon la revendication 1,
**caractérisé en ce que** le refroidisseur d'eau fraîche (13) et le groupe réfrigérant (11) sont réalisés de telle sorte qu'après avoir traversé le refroidisseur d'eau fraîche (13), l'eau fraîche puisse être refroidie à une température inférieure à 7°C, de préférence inférieure à 4°C, de manière préférentielle, à une température dans l'ordre de 1°C à 3°C, pour une température de sortie quelconque de l'eau fraîche dans l'ordre compris entre 15°C et 30°C.

3. Dispositif (1, 10) selon au moins l'une quelconque des revendications précédentes, **caractérisé en ce que** le groupe réfrigérant (11) et le refroidisseur d'eau fraîche (13) sont réalisés de telle sorte que le refroidisseur d'eau fraîche (13) présente une température d'évaporation supérieure à 0°C.

4. Dispositif (1, 10) selon au moins l'une quelconque des revendications précédentes, **caractérisé en ce que** près du refroidisseur d'eau fraîche (13), entre le premier et le deuxième trajet d'écoulement est placé un élément tampon thermique, de préférence un élément métallique à haute capacité thermique, de préférence en cuivre.

5. Dispositif (1, 10) selon au moins l'une quelconque des revendications précédentes, **caractérisé en ce que** le dispositif comprend une soupape de nettoyage à plusieurs voies (16) laquelle peut être reliée par voie conductrice de fluide au moins avec une sortie de café (7) et une sortie de nettoyage (17), la sortie de café (4a) de l'unité d'infusion (4) étant reliée en aval avec le deuxième trajet d'écoulement du refroidisseur de café (14) et plus loin en aval avec la soupape de nettoyage à plusieurs voies (16), de telle sorte qu'au choix, du liquide puisse être distribué en aval du deuxième trajet d'écoulement du refroidisseur de café (14) via la sortie de café (4a) ou via la sortie de nettoyage (17).

6. Dispositif (1, 10) selon au moins l'une quelconque des revendications précédentes, **caractérisé en ce que** le dispositif comprend une soupape d'eau fraîche à plusieurs voies (3) qui est placée entre l'arrivée d'eau fraîche (2) et le deuxième trajet d'écoulement du refroidisseur d'eau fraîche (13), de telle sorte que l'arrivée d'eau fraîche (2) puisse être reliée au choix, par voie conductrice de fluide avec le deuxième trajet d'écoulement du refroidisseur d'eau fraîche (13) ou en contournant le deuxième trajet d'écoulement du refroidisseur d'eau fraîche (13) et en contournant le premier trajet d'écoulement du refroidisseur de café (14), par voie conductrice de fluide avec l'unité d'infusion (4).

7. Dispositif (1, 10) selon au moins l'une quelconque des revendications précédentes, **caractérisé en ce que** le dispositif comprend une soupape de café à plusieurs voies (6), laquelle est placée entre la sortie de café (8) de l'unité d'infusion et le deuxième trajet d'écoulement du refroidisseur de café (14), de telle sorte que la sortie de café (8) de l'unité d'infusion (4) puisse être reliée par voie conductrice de fluide, au choix avec le deuxième trajet d'écoulement du refroidisseur de café (14) ou en contournant le deuxième trajet d'écoulement du refroidisseur de café (14), puisse être reliée par voie conductrice de fluide avec une sortie de café (7).

8. Dispositif (1, 10) selon au moins l'une quelconque des revendications précédentes, **caractérisé en ce que** le dispositif comprend un espace réfrigérant destiné à refroidir un aliment liquide, le circuit d'agent réfrigérant du groupe réfrigérant (11) étant relié par voie thermique avec l'espace réfrigérant et étant réalisé de telle sorte qu'au moyen de l'agent réfrigérant, aussi bien l'espace réfrigérant qu'également le premier trajet d'écoulement du refroidisseur d'eau fraîche (13) puissent être refroidis.

9. Dispositif (1, 10) selon la revendication 8, **caractérisé en ce que** le circuit d'agent réfrigérant du groupe réfrigérant (11) est relié par voie conductrice de fluide avec au moins deux évaporateurs, en partant d'un compresseur, celui-ci étant relié par voie conductrice de fluide dans le circuit d'agent réfrigérant, en aval avec un condenseur, plus loin en aval avec un premier évaporateur, pour le refroidissement de l'espace réfrigérant et plus loin en aval avec le premier trajet d'écoulement du refroidisseur d'eau fraîche (13) en tant que deuxième évaporateur, de préférence,
**en ce que** le premier évaporateur présente une température d'évaporateur inférieure à 0°C et/ou le deuxième évaporateur présente une température d'évaporateur supérieure à 0°C.

10. Procédé destiné à préparer du café refroidi, comprenant les étapes de procédé suivantes :
- préparation de café chaud dans une unité d'infusion (4),
- refroidissement du café au moyen d'un refroidisseur de café (14) conçu sous la forme d'un échangeur thermique et d'un groupe réfrigérant (11),
**caractérisé en ce que** de l'eau fraîche est refroidie au moyen du groupe réfrigérant (11), **en ce que** l'eau fraîche refroidie est dirigée à travers un premier trajet d'écoulement du refroidisseur de café (14) et le café est dirigé à travers un deuxième trajet d'écoulement du refroidisseur de café (14), le premier et le deuxième trajet d'écoulement étant reliés par voie thermique mais non pas conductrice de fluide et **en ce que** l'eau fraîche est dirigée, en aval du refroidisseur de café (14) vers l'unité d'infusion (4) pour la préparation de café, à partir de l'eau fraîche.

11. Procédé selon la revendication 10, **caractérisé en ce que** l'eau fraîche est refroidie au moyen d'un refroidisseur d'eau fraîche (13) réalisé sous la forme d'un échangeur thermique supplémentaire, un circuit d'agent réfrigérant s'effectuant entre le groupe réfrigérant (11) et un premier trajet d'écoulement du refroidisseur d'eau fraîche (13) et en aval d'une arrivée d'eau fraîche (2), l'eau fraîche étant dirigée à travers un deuxième trajet d'écoulement du refroidisseur d'eau fraîche, le premier et le deuxième trajet d'écoulement étant reliés par voie thermique mais non pas conductrice de fluide.

12. Procédé selon au moins l'une quelconque des revendications 10 à 11, **caractérisé en ce qu'**après avoir traversé le refroidisseur d'eau fraîche, l'eau fraîche est refroidie à une température inférieure à 7°C, de préférence inférieure 4°C, de préférence à une température dans l'ordre de 1°C à 3°C, pour une température de sortie quelconque du l'eau fraîche, au moins dans l'ordre compris entre 15°C et 30°C.

13. Procédé selon au moins l'une quelconque des revendications 10 à 12, **caractérisé en ce que** pour le nettoyage, on relie le deuxième trajet d'écoulement du refroidisseur de café (14) par voie conductrice de fluide avec une sortie de nettoyage et pour la distribution de café (8), on relie le deuxième trajet d'écoulement du refroidisseur de café (14) par voie conductrice de fluide avec une sortie de café (7).

14. Procédé selon au moins l'une quelconque des revendications 10 à 13, **caractérisé en ce que** pour la distribution de café (8), on relie d'abord pour une période prédéfinie le deuxième trajet d'écoulement du refroidisseur de café (14) par voie conductrice de fluide avec une sortie de nettoyage (17) et ensuite avec une sortie de café (7) .

15. Procédé selon au moins l'une quelconque des revendications 10 à 14, **caractérisé en ce que** pour distribuer du café chaud, on dirige l'eau fraîche en contournant le deuxième trajet d'écoulement du refroidisseur d'eau fraîche (13) et en contournant le premier trajet d'écoulement du refroidisseur de café (14) vers l'unité d'infusion (4) et/ou on dirige le café, en partant de l'unité d'infusion (4) en contournant le deuxième trajet d'écoulement du refroidisseur de café (14) vers la sortie de café (7).
